# EUROPÄISCHE PATENTSCHRIFT

(11) **EP 3 162 827 B1**
(45) Veröffentlichungstag und Bekanntmachung des Hinweises auf die Patenterteilung: **06.06.2018**
(21) Anmeldenummer: 15192087.3
(22) Anmeldetag: 29.10.2015
(51) Int. Cl.: C08G 18/62, C07F 7/18, C08G 18/71, C09D 175/04, C08L 75/04

(54) **BESCHICHTUNGSMITTEL MIT MONOALLOPHANATEN AUF BASIS VON ALKOXYSILANALKYLISOCYANATEN**
COATING AGENT WITH MONOALLOPHANATES BASED ON ALKOXYSILANAL KYLISOCYANATES
AGENT DE REVETEMENT AVEC DES MONOALLOPHANATES A BASE D'ALCOXYSILANE ALKYLISOCYANATES

(43) Veröffentlichungstag der Anmeldung: 03.05.2017
(73) Patentinhaber: Evonik Degussa GmbH, 45128 Essen (DE)
(72) Erfinder: SPYROU, Emmanouil, 46514 Schermbeck (DE); UNKELHÄUSSER, Tobias, 48249 Dülmen (DE); NAUMANN, Sabine, 44651 Herne (DE); KRECZINSKI, Manfred, 44652 Herne (DE); LOESCH, Holger, 44627 Herne (DE); MEIER, Alina, 45772 Marl (DE); KOREK, Uwe, 48249 Dülmen (DE)

(56) Entgegenhaltungen:
- EP-A1- 2 089 444
- US-A1- 2011 045 190
- US-A1- 2011 065 957

## Beschreibung

Die Erfindung betrifft Beschichtungsmittel mit neuen Monoallophanaten auf Basis von Alkoxysilanalkylisocyanaten, ein Verfahren zur Herstellung und die Verwendung.

Polyurethane haben sich seit vielen Jahrzehnten als hochwertige Bausteine für Lack-, Klebstoff-, Dichtstoff und Kunststoffsysteme erwiesen. Dabei können zusätzliche Alkoxysilangruppen hier eine wichtige Rolle z.B. in Hinblick auf Netzwerkdichte, Chemikalienbeständigkeit und Kratzfestigkeit spielen, in erste Linie durch die Ausbildung von Siloxanstrukturen. Auch solche Systeme sind bekannt.

Moleküle die sowohl über Alkoxysilangruppen verfügen, als auch Isocyanatgruppen aufweisen bieten die Möglichkeit beide genannte Funktionalitäten, Siloxane und Polyurethangruppen durch eine Komponente einzufügen. Auch solche Substanzen sind schon lange in Gebrauch, z.B. Isocyanatoalkyltrialkoxysilane. Aus diesen Substanzen können durch Umsetzung mit Polyalkoholen isocyanatfreie feuchtigkeitshärtende Vernetzer hergestellt werden.

Grundsätzlich können solche "SiPUR" (alkoxysilanhaltige Polyurethane) mit weiteren Isocyanaten zu Allophanaten umgesetzt werden, um bestimmte Materialeigenschaften zu modifizieren, z.B. die Viskosität.

So beschreibt die DE102005041953A1 eine Umsetzung eines Polyols mit einem mittleren Molekulargewicht von 3000 - 20000 g/Mol mit einem Überschuss von Isocyanatopropyltrimethoxysilan, so dass es nach der Polyurethanbildung zu einer Allophanatreaktion kommt.

In DE102005041954A1 wird ein Polyurethan aus einem Polyol und einem Diisocyananat (z.B. IPDI, Isophorondiisocyananat) mit Isocyanatopropyltrimethoxysilan versetzt und so lange erhitzt bis sich Allophanatstrukturen ausbilden.

EP2089444A1 beansprucht allophanathaltige Polyurethane, die neben einer ungesättigten Funktionalität noch Silangruppen haltige Komponenten aufweist.

Ähnlich sieht es auch in EP2089445A1 aus, hier müssen diese Polyurethane aber noch zusätzlich eine dispergieraktive Komponente enthalten, um sie wassergängig zu machen.

Auch in der US20140097392A1 ist von allophanat- und alkoxysilanhaltigen Polymeren die Rede, die in diesem Fall mit einem Farbstoff abgemischt werden.

J. Kozakiewicz et al. publizierten in Progress in Organic Coatings 72 (2011) 120- 130 silanhaltige Blockierungsmittel für Polyisocyanate, die über eine Allophanatgruppe eingebracht wurden. Offensichtlich gibt es einen Bedarf für weitere Alkoxysilangruppen tragende Verbindungen vor allem für Kratzfestanwendungen. Alle bisherigen Beispiele haben aber gemein, dass es sich hier immer um Polymere und/oder Polyurethane handelt, die sowohl hohe Viskositäten aufweisen als auch schwierig zu reinigen bzw. zu isolieren sind.

Aufgabe dieser Erfindung war es, Beschichtungsmittel mit neuen Alkoxysilangruppen tragende Verbindungen mit Kratzfesteigenschaften zugänglich zu machen, die nicht den Nachteil des Standes der Technik haben, insbesondere aber einfach herzustellen sind, niedrige Viskositäten aufweisen und mit wenig Aufwand zu reinigen sind.

Überraschend wurde gefunden, dass Monoallophanate, bestehend aus einem Isocyanat modifzierten Alkoxysilangruppen haltigen Monourethan die gewünschten Eigenschaften hat.

### Gegenstand der Erfindung ist ein

### Beschichtungsmittel umfassend

A) wenigstens eine Allophanat haltige Verbindungen mit der Formel 1: 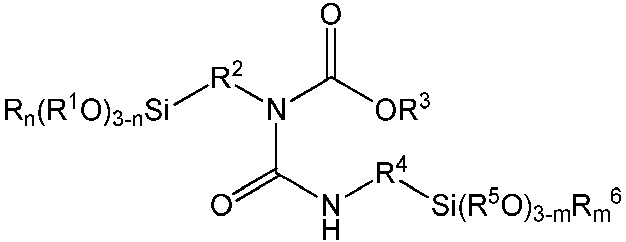 wobei R, R¹-R⁶ unabhängig voneinander gleiche oder verschiedene Kohlenwasserstoffreste mit 1-8 C-Atomen bedeuten, wobei diese verzweigt oder cyclisch sein können, oder auch cyclisch ineinander übergehen können, und m und n unabhängig voneinander gleich 0-2 bedeutet,
B) wenigstens ein Bindemittel, bevorzugt ein hydroxylgruppenhaltiges Bindemittel,
C) optional wenigstens ein aliphatisches oder cycloaliphatisches Polyisocyanat, das eine NCO-Funktionalität von wenigstens 2, bevorzugt 2,8 bis 6 aufweist,
D) optional wenigstens einen Katalysator,
E) optional Hilfsstoffstoffe und/oder Zusatzstoff,
F) optional Lösungsmittel.

Bevorzugt ist m und n gleich 0.
R¹ und R⁵ sind unabhängig voneinander bevorzugt Methyl oder Ethyl.
R² und R⁴ sind unabhängig voneinander bevorzugt Methyl oder Propyl.
Besonders bevorzugt ist R¹ = R⁵ und R² = R⁴.
Bevorzugt sind Verbindungen mit m und n gleich 0, R¹ und R⁵ gleich Methyl oder Ethyl, und
R² und R⁴ gleich Methyl oder Propyl.
Ganz besonders bevorzugt ist die Verbindung mit m und n gleich 0, R¹ = R⁵ = Methyl und R² = R⁴ = Propyl.

Die Monoallophanate mit der Formel 1: 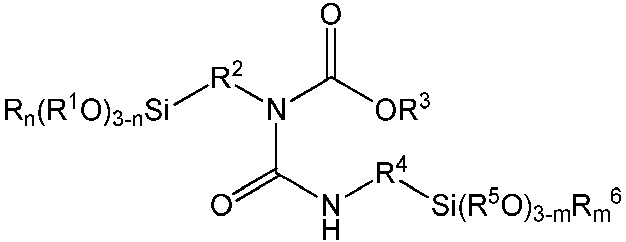 wobei R, R¹-R⁶ unabhängig voneinander gleiche oder verschiedene Kohlenwasserstoffreste mit 1-8 C-Atomen bedeuten, wobei diese verzweigt oder cyclisch sein können, oder auch cyclisch ineinander übergehen können, und m und n unabhängig voneinander gleich 0-2 bedeutet, werden hergestellt durch Reaktion von A) mit B):
Alkoxysilangruppen haltige Isocyanate A) weisen die Formel 2 auf:

R⁶ₘ(OR⁵)₃₋ₘSi-R⁴-NCO

wobei R⁶, R⁵ und R⁴ unabhängig voneinander gleiche oder verschiedene Kohlenwasserstoffreste mit 1-8 C-Atomen bedeuten, wobei diese verzweigt oder cyclisch sein können, oder auch cyclisch ineinander übergehen können, und m gleich 0-2 bedeutet.

Bevorzugt ist m = 0.
R⁴ ist bevorzugt Methyl oder Propyl.
R⁵ ist bevorzugt Methyl oder Ethyl.
Bevorzugt sind Verbindungen mit m gleich 0 und R⁴ gleich Methyl oder Propyl, und R⁵ gleich Methyl oder Ethyl.
Besonders bevorzugt ist Isocyanatopropyltrimethoxysilan.

Alkoxysilangruppen haltige Monourethane B) weisen die Formel 3 auf:

Rₙ(OR¹)₃₋ₙSi-R²-NH-(C=O)-OR³

wobei R, R¹, R² und R³ unabhängig voneinander gleiche oder verschiedene Kohlenwasserstoffreste mit 1-8 C-Atomen bedeuten, wobei diese verzweigt oder cyclisch sein können, oder auch cyclisch ineinander übergehen können, und n gleich 0-2 bedeutet.

Bevorzugt ist n = 0.
R¹ ist bevorzugt Methyl oder Ethyl.
R² ist bevorzugt Methyl oder Propyl.
Bevorzugt ist R³ = R¹.
Bevorzugt sind Verbindungen mit n gleich 0 und R² gleich Methyl oder Propyl, und R¹ gleich Methyl oder Ethyl und R³ = R¹.
Besonders bevorzugt ist N-Trimethoxysilylpropylmethylcarbamat.

Die Herstellung der Monoallophanate erfolgt im Allgemeinen lösungsmittelfrei oder unter Verwendung von nicht-protischen Lösemitteln, wobei die Umsetzung diskontinuierlich oder kontinuierlich erfolgen kann. Die Reaktion wird durchgeführt in geeigneten Aggregaten, z.B. Rührkessel, Extruder, Statikmischern, Knetkammern. Die Reaktion kann bei Raumtemperatur, das heißt bei Temperaturen im Bereich von 20 bis 22 °C, geführt werden, bevorzugt werden jedoch höhere Temperaturen im Bereich 80 bis 220 °C, insbesondere im Bereich von 80 bis 120 °C verwendet. Zur Beschleunigung der Reaktion können vorteilhaft in der Urethanchemie bekannte Katalysatoren, z.B. Metallorganische Verbindungen, wie Zinn oder Zink haltige Verbindungen, Salze, wie z.B. Zn(II)chlorid und/oder Basen verwendet werden. Geeignet sind zum Beispiel Sn-, Bi-, Zn- und andere Metallcarboxylate wie z,B. Dibutylzinndilaurat, Zinnoctoat, Bismuthneodecanoat, tert.-Amine wie beispielsweise 1,4-Diazabicyclo[2.2.2]octan (DABCO), Triethylamin, Amidine und Guanidine, quarternäre Ammoniumsalze, bevorzugt Tetralkylammoniumsalze und/oder quarternäre Phosphoniumsalze .
Als Katalysatoren kommen Metallacetylacetonate in Frage. Beispiele dafür sind Zinkacetylacetonat, Lithiumacetylacetonat Eisenacetylacetonat und Zinnacetylacetonat, allein oder in Mischungen. Bevorzugt wird Zinkacetylacetonat eingesetzt. Als Katalysatoren kommen außerdem quarternäre Ammoniumacetylacetonate oder quarternäre Phosphoniumacetylacetonate in Frage. Bevorzugt wird Zinkethylhexanoat. Die Reaktion wird unter Ausschluss von Wasser durchgeführt. Bevorzugt wird die Reaktion lösemittelfrei durchgeführt.

Das erfindungsgemäße Beschichtungsmittel besteht bevorzugt im Wesentlichen aus den Komponenten A), B), C), D) und E). In einer bevorzugten Ausführungsform bedeutet dies, dass die Summe der Komponenten A), B), C), D) und E) in der Reihenfolge zunehmender Bevorzugung wenigstens 45, 50, 55, 60, 65, 70, 75, 80, 85, 90, 92, 94, 96, 98 oder 99 Gewichtsprozent des Beschichtungsmittels ausmachen.

In einer bevorzugten Ausführungsform handelt es sich bei den erfindungsgemäßen Beschichtungsmittel um ein nicht wässriges Beschichtungsmittel. In einer besonders bevorzugten Ausführungsform bedeutet der Begriff "nicht wässrig", wie hierin verwendet, dass das erfindungsgemäße Beschichtungsmittel bezogen auf die Summe der Komponenten A), B), C), D) und E) einen Wasseranteil von nicht mehr als 3 Gewichtsprozent, bevorzugt nicht mehr als 1 Gewichtsprozent aufweist. In einer bevorzugtesten Ausführungsform ist das erfindungsgemäße Beschichtungsmittel frei von Wasser.

Die Komponente A) ist zu 10 bis 99 Gew.-%, bevorzugt zu 10 bis 70 Gew.-% ,bezogen auf die Summe der Komponenten A), B), und C), in dem erfindungsgemäßen Beschichtungsmittel enthalten.

Das als Vernetzerkomponente verwendete aliphatische oder cycloaliphatische Polyisocyanat C) umfasst mindestens ein aliphatisches und/oder cycloaliphatisches Polyisocyanat mit einer NCO-Funktionalität von wenigstens 2, bevorzugt 2 bis 6, bevorzugter von 2,8 bis 6, am bevorzugtesten 2 bis 4. In einer bevorzugten Ausführungsform wird unter dem Begriff "NCO-Funktionalität", wie hierin verwendet, die Zahl der reaktiven NCO-Substituenten verstanden, die das entsprechende Molekül, bevorzugt die Vernetzerkomponente C), durchschnittlich aufweist.

Das erfindungsgemäß eingesetzte Polyisocyanat kann ein beliebiges aliphatisches, cycloaliphatisches und/oder (cyclo)aliphatisches Diisocyanat sein. In einer bevorzugten Ausführungsform wird unter dem Begriff "(cyclo)aliphatisches Diisocyanat", wie hierin verwendet, verstanden, dass in einem Molekül gleichzeitig an einen Ring gebundene NCO-Gruppen und an einen aliphatischen Rest gebundene NCO-Gruppen vorhanden sind, wie es z. B. beim Isophorondiisocyanat der Fall ist. In einer bevorzugten Ausführungsform wird unter dem Begriff "cycloaliphatisches Diisocyanat", wie hierin verwendet ein Diisocyanat verstanden, das nur direkt am cycloaliphatischen Ring gebundene NCO-Gruppen aufweist, z. B. Diisocyanatodicyclohexylmethan (H12MDI).

Zur Verwendung als Polyisocyanat C) geeignete aliphatische Diisocyanate umfassen einen linearen oder verzweigten Alkylenrest mit bevorzugt 3 bis 16 Kohlenstoffatome, bevorzugter 4 bis 12 Kohlenstoffatome. Geeignete cycloaliphatische oder (cyclo)aliphatische Diisocyanate umfassen einen Cycloalkylenrest mit bevorzugt 4 bis 18 Kohlenstoffatomen, bevorzugter 6 bis 15 Kohlenstoffatomen, auf. Beispiele geeigneter Di- oder Polyisocyanate umfassen Cyclohexandiisocyanat, Methylcyclohexandiisocyanat, Ethylcyclo-hexandiisocyanat, Propylcyclohexandiisocyanat, Methyldiethylcyclohexan-diisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und -triisocyanat, Dodecandi- und -triisocyanate. Ebenfalls geeignet sind 4-Methyl-cyclohexan-1,3-diisocyanat, 2-Butyl-2-ethylpentamethylen-diisocyanat, 3(4)-Isocyanatomethyl-1-methylcyclohexylisocyanat, 2-Isocyanatopropylcyclohexyl-isocyanat, 2,4'-Methylenbis(cyclohexyl)diisocyanat und/oder 1,4-Diisocyanato-4-methyl-pentan.

Bevorzugt ist das als Polyisocyanat verwendete Diisocyanat ausgewählt aus der Gruppe, die Isophorondiisocyanat (IPDI), Hexamethylendiisocyanat (HDI), Diisocyanato-dicyclohexylmethan (H12MDI), 2-Methylpentandiisocyanat (MPDI), 2,2,4-Trimethylhexamethylendiisocyanat/2,4,4-Trimethylhexamethylendiisocyanat (TMDI), Nor-bornandiisocyanat (NBDI) umfasst. Besonders bevorzugt sind IPDI, HDI, TMDI und/oder H12MDI, wobei IPDI, H12MDI und/oder HDI die bevorzugtesten Polyisocyanate darstellen.

Es werden besonders bevorzugt Polyisocyanate verwendet, die sich aus den genannten Diisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Solche Polyisocyanate sind im Handel erhältlich. Besonders geeignet sind Isocyanurate, insbesondere aus IPDI und/oder HDI, z.B. VESTANAT HT 2500 L und VESTANAT T 1890. Derartige Polyisocyanate können gegebenenfalls mit Di- oder polyfunktionellen, H-aciden Komponenten, wie z. B. Di- oder Polyolen und/oder Di- oder Polyaminen, zusätzlich kettenverlängert oder verzweigt sein. Die erfindungsgemäß bevorzugt zu verwendenden sind durch destillative Abtrennung von Restmonomeren befreit, so dass der Gehalt an Diisocyanat-Restmonomer <0.5 Gew.-% beträgt.

Im Rahmen der vorliegenden Erfindung können beliebige Gemische der vorab beschriebenen Di- und/oder Polyisocyanate eingesetzt werden.

Die Komponente C), falls enthalten, ist in der erfindungsgemäßen Beschichtungszusammensetzung zu 5 bis 50 Gewichtsprozent, bevorzugt 15 bis 40 Gewichtsprozent, bezogen auf die Summe der Komponenten A), B) und C) enthalten. Beispielsweise ist C) bezogen auf die Summe der Komponenten A), B) und C) zu 50 Gewichtsprozent in dem erfindungsgemäßen Beschichtungsmittel enthalten, wenn 25 g A), 12,5 g B) und 12,5 g C) enthalten sind. Die Menge der Komponente C) in dem erfindungsgemäßen Beschichtungsmittel orientiert sich am Gehalt der chemisch mit Polyisocyanaten vernetzbaren Gruppen - üblicherweise OH-Gruppen - der Komponente B). Das molare Verhältnis der Isocyanatgruppen der Komponente C) und der OH-Gruppen der Komponente B) beträgt 0,3:1 bis 2:1, bevorzugt 0,5:1 bis 1,5:1 und besonders bevorzugt 0,7:1 bis 1,3:1.

Das erfindungsgemäße Beschichtungsmittel enthält als Komponente B) wenigstens ein Bindemittel. Grundsätzlich eignet sich als Bindemittel alle dem Fachmann bekannten Arten von Bindemitteln, beispielsweise auch thermoplastische, das heißt nicht vernetzbare Bindemittel, die üblicherweise ein mittleres Molekulargewicht > 10000 g/mol aufweisen. Bevorzugt werden jedoch Bindemittel, die über reaktive funktionelle Gruppen mit aciden Wasserstoffatomen z. B. Hydroxyl- oder primäre oder sekundäre Amingruppen verfügen. Geeignete Bindemittel der genannten Art weisen beispielsweise mindestens eine, bevorzugt jedoch zwei oder mehr Hydroxylgruppen auf. Weitere geeignete funktionelle Gruppen des Bindemittels sind beispielsweise Alkoxysilan-Funktionalitäten. Bevorzugt eingesetzt werden ein Addukt von einem Isocyanato-trialkyoxysilan und einem ein- oder mehrwertigen Alkohol, bevorzugt Adukkte von 3-Isocyanatopropyltrimethoxysilan, 3-Isocyanatopropyltriethoxysilan, 3-Isocyanatopropyltriisopropoxysilan, 2-Isocyanatoethyltrimethoxysilan, 2-Isocyanatoethyltriethoxysilan, 2-Isocyanatoethyltriisopropoxysilan, 4-Isocyanatobutyltrimethoxysilan, 4-Isocyanatobutyltriethoxysilan, 4-Isocyanatobutyltriisopropoxysilane, Isocyanatomethyltrimethoxysilan, Isocyanatomethyltriethoxysilan und/oder Isocyanatomethyltriisopropoxysilan.

Als Bindemittel mit funktionellen Gruppen werden bevorzugt hydroxylgruppenhaltige Polyester, Polyether, Polyacrylate, Polycarbonate und Polyurethane mit einer OH-Zahl von 20 bis 500 mg KOH/g und einer mittleren Molmasse von 250 bis 6000 g/Mol eingesetzt. Besonders bevorzugt werden im Rahmen der vorliegenden Erfindung Hydroxylgruppen-haltige Polyester oder Polyacrylate mit einer OH-Zahl von 50 bis 250 mg KOH/g und einem mittleren Molekulargewicht von 500 bis 6000 g/mol als Bindemittelkomponenten eingesetzt. Die Hydroxylzahl (OH-Zahl, OHZ) wird bestimmt nach DIN 53240-2. Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt. Das Molekulargewicht wird bestimmt mittels Gelpermeationschromatographie (GPC). Die Charakterisierung der Proben erfolgt in Tetrahydrofuran als Eluent nach DIN 55672-1.

Als Bindemittel eingesetztes hydroxylgruppenhaltiges (Meth)acryl-Copolymerisat können Harze mit einer Monomerzusammensetzung, wie sie z. B. in WO 93/15849 (S. 8, Zeile 25 bis S. 10, Zeile 5, beschrieben sind, verwendet werden. Dabei sollte die durch anteilige Verwendung von (Meth)acrylsäure als Monomer einzustellende Säurezahl des (Meth)acryl-Copolymerisates 0 bis 30, vorzugsweise 0 bis 15 mg KOH/g betragen. Das zahlenmittlere Molgewicht (ermittelt durch Gelpermeationschromatographie gegen einen Polystyrolstandard) des (Meth)acryl-Copolymerisates beträgt vorzugsweise 2000 bis 20000 g/mol, die Glasübergangstemperatur beträgt vorzugsweise - 40°C bis + 60 °C. Der durch anteilige Verwendung von Hydroxyalkyl(meth)acrylaten einzustellende Hydroxylgehalt der erfindungsgemäß zu verwendenden (Meth)acryl-Copolymerisate beträgt vorzugsweise 20 bis 500 mg KOH/g, besonders bevorzugt 50 bis 250 mg KOH/g.

Erfindungsgemäß als Bindemittel geeignete Polyesterpolyole sind Harze mit einer Monomerzusammensetzung aus Di- und Polycarbonsäuren und Di- und Polyolen, wie sie in der WO 93/15849 beschrieben sind. Als Polyesterpolyole können auch Polyadditionsprodukte von Caprolacton an niedermolekulare Di- und Triole, wie sie z. B. unter der Bezeichnung CAPA® (Perstorp) erhältlich sind, eingesetzt werden. Das rechnerisch bestimmte zahlenmittlere Molgewicht beträgt vorzugsweise 500 bis 5000 g/mol, besonders bevorzugt 800 bis 3000 g/mol, die mittlere Funktionalität beträgt vorzugsweise 2,0 bis 4,0, bevorzugt 2,0 bis 3,5.

Als erfindungsgemäß als Bindemittel zu verwendende urethan- und estergruppenhaltige Polyole kommen prinzipiell auch solche zum Einsatz, wie sie in EP 140 186 beschrieben sind. Bevorzugt sind urethan- und estergruppenhaltige Polyole, zu deren Herstellung HDI, IPDI, Trimethylhexamethylendiisocyanat (TMDI) oder Dicyclohexylmethandiisocyanat (H12-MDI) verwendet werden, eingesetzt. Das zahlenmittlere Molgewicht beträgt vorzugsweise 500-5000 g/mol, die mittlere Funktionalität liegt insbesondere im Bereich von 2,0 - 3,5.

Auch Trialkoxysilan-funktionelle Bindemittel eignen sich zur Verwendung als Komponente B). Derartige Harze können durch Copolymerisation von Acrylat- oder Methacrylat-Monomeren mit acryl- oder methacryl-funktionellen Alkyl-Trialkoxysilan-Derivaten (z. B. Dynasylan MEMO der Evonik Industries AG) gewonnen werden, wie zum Beispiel in der WO 92/11328 beschrieben. Ein alternativer Syntheseweg besteht in der Derivatisierung von hydroxylgruppenhaltigen Polyethern, Polyestern, Polycarbonatdiolen oder Polyacrylaten mit Isocyanatopropyltrialkoxysilan, wie sie beispielsweise in WO2008/131715 in den Beispielen 3 und 4 beschrieben ist. Auch aminohaltige Bindemittel kommen in Frage, z.B., Aminopropyltrimethoxysilan (z.B. Dynasylan AMMO der Evonik Industries AG), Aminopropyltriethoxysilan, Aminomethyltrimethoxysilan oder Aminomethyltriethyoxysilan.

Selbstverständlich können auch Mischungen der vorab beschriebenen Bindemittel eingesetzt werden. Bevorzugte Bindemittel sind hydroxylgruppenhaltige Polyester und Polyacrylate, allein oder in Mischungen.

Der Anteil von B) in dem erfindungsgemäßen Beschichtungsmittel beträgt bevorzugt 1 bis 90 Gewichtsprozent, bezogen auf die Summe der Komponenten A), B) und gegebennanfalls C) und D), bevorzugt 20 bis 60 Gewichtsprozent.

Als Katalysator D) ist in einer bevorzugten Ausführungsform in einer Menge von 0,1 bis zu 5 Gewichtsprozent, vorzugsweise 0,2 bis 3 Gewichtsprozent, bezogen auf die Summe der Komponenten A), B), ggf. C) und D), in dem erfindungsgemäßen Beschichtungsmittel enthalten.

Als Katalysatoren D) können organische Carbonsäuren verwendet werden. Beispiele geeigneter Carbonsäuren sind insbesondere Salicylsäure, Benzoesäure, Zitronensäure, Phthalsäure, Terephthalsäure, Isophthalsäure, Dodecansäure, 1.12-Dodecandisäure und/oder Ascorbinsäure. Bevorzugt werden Salicylsäure, Zitronensäure oder Benzoesäure verwendet, wobei auch Mischungen der genannten Carbonsäuren eingesetzt werden können.

Als Katalysator D) werden auch quarternäre Ammoniumsalze allein oder in Mischungen, bevorzugt Tetralkylammoniumsalze und/oder quarternäre Phosphoniumsalze mit Halogenen, Hydroxiden, Alkoholaten oder organischen oder anorganischen Säureanionen als Gegenion, eingesetzt.

### Beispiele dafür sind:

Tetramethylammoniumformiat, Tetramethylammoniumacetat, Tetramethylammoniumpropionat, Tetramethylammoniumbutyrat, Tetramethylammonium-benzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und Tetrabutylammoniumbenzoat und Tetrabutylphosphoniumacetat, Tetrabutylphosphoniumformiat und Ethyltriphenylphosphoniumacetat, Tetrabutylphosphoniumbenzotriazolat, Tetraphenylphosphoniumphenolat und Trihexyltetradecylphosphoniumdecanoat, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Methyltributylammoniummethanolat, Methyltriethylammoniummethanolat, Tetramethylammoniummethanolat, Tetraethylammoniummethanolat, Tetrapropylammoniummethanolat, Tetrabutylammoniummethanolat, Tetrapentylammoniummethanolat, Tetrahexylammoniummethanolat, Tetraoctylammoniummethanolat, Tetradecylammoniummethanolat, Tetradecyltrihexylammoniummethanolat, Tetraoctadecylammoniummethanolat, Benzyltrimethylammoniummethanolat, Benzyltriethylammoniummethanolat, Trimethylphenylammoniummethanolat, Triethylmethylammoniummethanolat, Trimethylvinylammoniummethanolat, Methyltributylammoniumethanolat, Methyltriethylammoniumethanolat, Tetramethylammoniumethanolat, Tetraethylammoniumethanolat, Tetrapropylammoniumethanolat, Tetrabutylammoniumethanolat, Tetrapentylammoniumethanolat, Tetrahexylammoniumethanolat, Tetraoctylammoniummethanolat, Tetradecylammoniumethanolat, Tetradecyltrihexylammoniumethanolat, Tetraoctadecylammoniumethanolat, Benzyltrimethylammoniumethanolat, Benzyltriethylammoniumethanolat, Tri methylphenylammoniumethanolat, Triethylmethylammoniumethanolat, Tri methylvinylammoniumethanolat, Methyltributylammoniumbenzylat, Methyltriethylammoniumbenzylat, Tetramethylammoniumbenzylat, Tetraethylammoniumbenzylat, Tetrapropylammoniumbenzylat, Tetrabutylammoniumbenzylat, Tetrapentylammoniumbenzylat, Tetrahexylammoniumbenzylat, Tetraoctylammoniumbenzylat, Tetradecylammoniumbenzylat, Tetradecyltrihexylammoniumbenzylat, Tetraoctadecylammoniumbenzylat, Benzyltrimethylammoniumbenzylat, Benzyltriethylammoniumbenzylat, Trimethylphenylammoniumbenzylat, Triethylmethylammoniumbenzylat, Trimethylvinylammoniumbenzylat, Tetramethylammoniumfluorid, Tetraethylammoniumfluorid, Tetrabutylammoniumfluorid, Tetraoctylammoniumfluorid, Benzyltrimethylammoniumfluorid, Tetrabutylphosphoniumhydroxid, Tetrabutylphosphoniumfluorid, Tetrabutylammoniumchlorid, Tetrabutylammoniumbromid, Tetrabutylammoniumiodid, Tetraethylammoniumchlorid, Tetraethylammoniumbromid, Tetraethylammoniumiodid, Tetramethylammoniumchlorid, Tetramethylammoniumbromid, Tetramethylammoniumiodid, Benzyltrimethylammoniumchlorid, Benzyltriethylammoniumchlorid, Benzyltripropylammoniumchlorid, Benzyltributylammoniumchlorid, Methyltributylammoniumchlorid, Methyltripropylammoniumchlorid, Methyltriethylammoniumchlorid, Methyltriphenylammoniumchlorid, Phenyltrimethylammoniumchlorid, Benzyltrimethylammoniumbromid, Benzyltriethylammoniumbromid, Benzyltripropylammoniumbromid, Benzyltributylammoniumbromid, Methyltributylammoniumbromid, Methyltripropylammoniumbromid, Methyltriethylammoniumbromid, Methyltriphenylammoniumbromid, Phenyltrimethylammoniumbromid, Benzyltrimethylammoniumiodid, Benzyltriethylammoniumiodid, Benzyltripropylammoniumiodid, Benzyltributylammoniumiodid, Methyltributylammoniumiodid, Methyltripropylammoniumiodid, Methyltriethylammoniumiodid, Methyltriphenylammoniumiodid und Phenyltrimethylammoniumiodid, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Tetramethylammoniumfluorid, Tetraethylammoniumfluorid, Tetrabutylammoniumfluorid, Tetraoctylammoniumfluorid und Benzyltrimethylammoniumfluorid. Diese Katalysatoren können allein oder in Mischungen zugesetzt werden. Bevorzugt werden Tetraethylammoniumbenzoat und Tetrabutylammoniumhydroxid verwendet.

Als Katalysator D) können auch Metallkomplexe mit Chelatliganden verwendet werden. Bei den Chelatliganden handelt es sich um organische Verbindungen mit wenigstens zwei funktionellen Gruppen, die an Metallatome oder -ionen koordinieren können. Es können beispielsweise die Aluminium- und Zirkon-Chelatkomplexe, wie sie beispielsweise in US-P 4,772,672 A, beschrieben sind, als Katalysator verwendet werden. Bevorzugte Metallchelate sind Chelat auf Basis von Zink, Lithium, Zinn, Aluminium, Zirkon, Titan und/oder Bor, wie beispielsweise Aluminiumethylacetoacetat, Zirkonethylacetoacetat,Zinkacetylacetonat, Lithiumacetylacetonat und Zinnacetylacetonat, allein oder in Mischungen. Bevorzugt wird Zinkacetylacetonat eingesetzt.

Als Katalysatoren D) kommen ausserdem quarternäre Ammoniumacetylacetonate oder quarternäre Phosphoniumacetylacetonate in Frage.
Beispiele für solche Katalysatoren sind Tetramethylammoniumacetylacetonat, Tetraethylammoniumacetylacetonat, Tetrapropylammoniumacetylacetonat, Tetrabutylammoniumacetylacetonat, Benzyltrimethylammoniumacetylacetonat, Benzyltriethylammoniumacetylacetonat, Tetramethylphosphoniumacetylacetonat, Tetraethylphosphoniumacetylacetonat, Tetrapropylphosphoniumacetylacetonat, Tetrabutylphosphoniumacetylacetonat, Benzyltrimethylphosphoniumacetylacetonat, Benzyltriethylphosphoniumacetylacetonat. Besonders bevorzugt werden Tetraethylammoniumacetylacetonat und Tetrabutylammoniumacetylacetonat eingesetzt. Selbstverständlich können auch Mischungen solcher Katalysatoren verwendet werden.

Als Katalysator D) sind ferner Aluminium-, Zirkon-, Titan- und/oder Bor-Alkoholate und/oder Ester davon geeignet.

Auch geeignet als Katalysatoren sind basische Stoffe wie z.B. Guanidine und Amidine und tertiäre Amine. Beispiele dafür sind Tetramethylguanidin, Diazabicyloundecen (DBU), Diazabicyclononen (DBN), und Diazabicyclooctan (DABCO).

Als Katalysator D) können zur Katalyse der Urethanreaktion auch Katalysatoren verwendet werden, die sich auf dem Gebiet der PUR-Technologie bewährt haben, z. B. organische Sn(IV)-Sn(II), Zn, Bi-Verbindungen, oder metallorganischen Katalysatoren, wie z. B. Dibutylzinndilaurat, Zinnoctoat, Bismuthneodecanoat, oder tertiäre Amine, wie z. B. 1,4-Diazabicylco[2.2.2.]octan, . Derartige Katalysatoren für Urethanreaktionen werden erfindungsgemäß jedoch nur in Abmischungen mit anderen erfindungsgemäßen Katalysatoren verwendet.

Als Katalysator D) kann auch ein phosphorhaltiger, bevorzugt phosphor- und stickstoff-haltiger Katalysator eingesetzt werden. Dabei können auch Mischungen aus zwei oder mehreren verschiedenen Katalysatoren eingesetzt werden. Beispiele für geeignete phosphorhaltige Katalysatoren sind substituierte Phosphonsäurediester und Diphosphonsäurediester, vorzugsweise aus der Gruppe bestehend aus acyclischen Phosphonsäurediestern, cyclischen Phosphonsäurediestern, acyclischen Diiphosphonsäurediestern und cyclischen Diphosphonsäurediestern. Derartige Katalysatoren sind beispielsweise in der DE-A 102005045228 beschrieben.

Als Katalysator D) kann bevorzugt auch ein aminblockierter Phosphorsäureester und besonders bevorzugt aminblockierter Phosphorsäureethylhexylester und aminblockierter Phosphorsäurephenylester eingesetzt werden. Als Beispiele für Amine, mit welchem die Phosphorsäureester blockiert werden, sind insbesondere tertiäre Amine, beispielsweise Triethylamin, zu nennen. Besonders bevorzugt werden zur Blockierung der Phosphorsäureester tertiäre Amine eingesetzt, die eine gute Wirksamkeit des Katalysators bei Härtungstemperaturen von 100 bis 160 °C aufweisen. Bestimmte mit Amin blockierte Phosphorsäurekatalysatoren sind auch kommerziell erhältlich (z. B. Nacure-Typen der Fa. King Industries). Beispielsweise sei der unter der Bezeichnung Nacure 4167 von der Firma King Industries als besonders geeigneter Katalysator auf der Basis eines Amin - blockierten Phosphorsäureteilesters genannt.

Als Katalysator D) können auch organische Sulfonsäuren in unblockierter oder blockierter Form verwendet werden. Als Sulfonsäure ist grundsätzlich jede organische Sulfonsäure geeignet, bevorzugt sind p-Toluolsulfonsäure und Dodecylbenzolsulfonsäure. Für thermisch, d. h. oberhalb von 100 °C vernetzende Beschichtungssysteme können diese Sulfonsäuren erfindungsgemäß auch in amin-neutralisierter Form bevorzugt eingesetzt werden. Erfindungsgemäß können auch latente, nicht-ionogene Sulfonsäurederivate, die erst oberhalb von 100 °C Sulfonsäuren freisetzen, wie z. B. Addukte von Sulfonsäuren an epoxidhaltige Komponenten, wie es in DE-OS 23 56768 beschrieben wird, eingesetzt werden

Auch Salze der Trifluormethansulfonsäure (Triflate) sind geeignete Sulfonsäure-basierte Katalysatoren.

Der Katalysator D) in den erfindungsgemäßen Beschichtungsmitteln kann allein aus den oben genannten Alternativen bestehen, es können aber auch beliebige Mischungen der Katalysatoren eingesetzt werden.

Das erfindungsgemäße Beschichtungsmittel kann zusätzlich in der Lacktechnologie bekannte Hilfsstoffe und/oder Zusatzstoffe E) wie Stabilisatoren, Lichtschutzmittel, Katalysatoren, zusätzliche Vernetzer, Füllstoffe, Pigmente, Verlaufsmittel oder Rheologiehilfsmittel, wie z. B. sog. "sag control agents", Mikrogele oder pyrogenes Siliciumdioxid oder auch Nanopartikel, wie z. B. in EP 1204701 B1 beschrieben, in typischen Konzentrationen enthalten. Zusätzlich kann die Komponente E) zusätzliche Vernetzer wie in der Lackchemie bekannt, z. B. in Form von Melamin-, Benzoguanamin-Harzen, carbamatfunkionelle Komponenten oder blockierte Polyisocyanate eingesetzt werden. Falls erforderlich, können in der Komponente E) der erfindungsgemäßen Beschichtungsmittel auch in der Lacktechnologie übliche anorganische oder organische Farb- und/oder Effektpigmente eingearbeitet werden.

In einer bevorzugten Ausführungsform ist das erfindungsgemäße Beschichtungsmittel ein pigmentfreies System, also ein Klarlacksystem. Die Komponente E) kann in diesem Fall vorzugsweise in einer Menge von 0,5 bis zu 8 Gewichtsprozent, noch bevorzugter 1 bis 6 % Gewichtsprozent, bezogen auf die Summe der Komponenten A), B), und C), in dem erfindungsgemäßen Beschichtungsmittel enthalten sein. Beispielsweise liegt die Komponente E) in einer Menge von 6 % bezogen auf die Summe der Komponenten A), B) und C) vor, wenn das Beschichtungsmittel, d.h. die Summe der Komponenten A), B), C), D), E) und F), ein Gesamtgewicht von 110 g aufweist, die Summe der Komponenten A), B) und C) dabei 100 g, die Menge an E) 6 g und die Menge an D) und F) jeweils 2 g beträgt.

In einer weiteren bevorzugten Ausführungsform ist das erfindungsgemäße Beschichtungsmittel ein farbiges Beschichtungssystem. Pigmente und Füllstoffe als Komponente E) können in diesem Fall in einer Menge von 10 bis 200 Gewichtsprozent bezogen auf die Summe der Komponenten A), B), und C) in dem erfindungsgemäßen Beschichtungsmittel enthalten sein. Beispielsweise liegt die Komponente E) in einer Menge von 200 Gewichtsprozent bezogen auf die Summe der Komponenten A), B) und C) vor, wenn das Beschichtungsmittel, d. h. die Summe der Komponenten A), B), C), D), E) und F), ein Gesamtgewicht von 110 g aufweist, die Summe der Komponenten A), B) und C) dabei 30 g beträgt, die Menge an E) 60 g beträgt und die Menge an D) und F) jeweils 10 g beträgt.

Weiterhin kann das erfindungsgemäße Beschichtungsmittel organische Lösemittel als Komponente F) enthalten. Geeignete Lösemittel sind z. B. Ketone, Alkohole, Ester oder Aromaten.

Die Komponente F) ist bevorzugt in Mengen von 20 bis zu 150 Gewichtsprozent, noch bevorzugter 30 bis 60 Gewichtsprozent, bezogen auf die Summe der Komponenten A), B) und C), in dem erfindungsgemäßen Beschichtungsmittel enthalten.

Die Gesamtheit der jeweiligen Anteile der Komponenten A), B), C), D), E) und F) sind so gewählt, dass sich die Gewichtsanteile zu 100 Gewichtsprozent aufaddieren.

Eine weitere bevorzugte Ausführungsform ist ein erfindungsgemäßes Beschichtungsmittel wie folgt:

### Beschichtungsmittel umfassend

A) 10-99 Gew.% wenigstens eine Allophanat haltige Verbindungen mit der Formel 1: 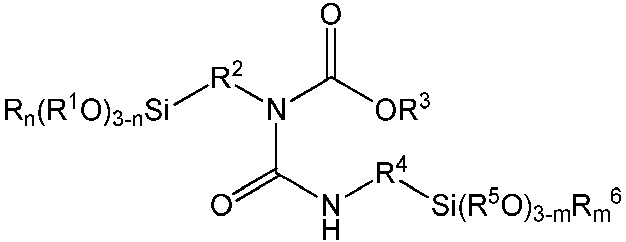 wobei R, R¹-R⁶ unabhängig voneinander gleiche oder verschiedene Kohlenwasserstoffreste mit 1-8 C-Atomen bedeuten, wobei diese verzweigt oder cyclisch sein können, oder auch cyclisch ineinander übergehen können, und m und n unabhängig voneinander gleich 0-2 bedeutet,
B) 1-90 Gew.% wenigstens ein Bindemittel, bevorzugt ein hydroxylgruppenhaltiges oder amingruppenhaltiges Bindemittel,
C) 0-50 Gew.% wenigstens ein aliphatisches oder cycloaliphatisches Polyisocyanat, das eine NCO-Funktionalität von wenigstens 2, bevorzugt 2,8 bis 6 aufweist,
D) 0-5 Gew.% wenigstens einen Katalysator,
E) 0-50 Gew.% Hilfsstoffstoffe und/oder Zusatzstoff, wobei sich die Komponenten zu 100 Gew.% addieren,
F) optional Lösungsmittel.

Die Herstellung der erfindungsgemäßen Beschichtungsmittel erfolgt durch Mischung der vorab beschriebenen Komponenten. Das Mischen kann durch dem Fachmann bekannte Mischer erfolgen, beispielsweise diskontinuierlich in Rührbehältern, Dissolvern, Perlmühlen, Walzenstühlen, etc. oder auch kontinuierlich unter Verwendung von z. B. Statikmischern erfolgen.

Die vorliegende Erfindung wird weiterhin durch die folgenden nicht beschränkenden Beispiele veranschaulicht, denen weitere Merkmale, Ausführungsformen, Aspekte und Vorteile der vorliegenden Erfindung entnommen werden können.

Gegenstand der Erfindung ist auch die Verwendung der erfindungsgemäßen Beschichtungsmittel in Lackzusammensetzungen für Metall-, Kunststoff-, Glas-, Holz-, MDF- (Middle Density Fiber Boards) oder Ledersubstrate oder sonstigen hitzeresistenten Untergründen.

Gegenstand der Erfindung ist auch die Verwendung der erfindungsgemäßen Beschichtungsmittel in Klebstoffzusammensetzungen für Verklebungen von Metall-, Kunststoff-, Glas-, Holz-, MDF- oder Ledersubstraten oder sonstigen hitzeresistenten Untergründen.

Ebenfalls Gegenstand der Erfindung sind Metallbeschichtungszusammensetzungen, insbesondere für Automobilkarossen, Motor- und Fahrräder, Gebäudeteile und Haushaltsgeräte, Holzbeschichtungszusammensetzungen, MDF-Beschichtungen, Glasbeschichtungszusammensetzungen, Lederbeschichtungszusammensetzungen und Kunststoffbeschichtungszusammensetzungen.

Die vorliegende Erfindung wird weiterhin durch die folgenden nicht beschränkenden Beispiele veranschaulicht, denen weitere Merkmale, Ausführungsformen, Aspekte und Vorteile der vorliegenden Erfindung entnommen werden können.

### Beispiele

### 1) Herstellung der Monoallophanate

a) 236 g (1 mol) Trimethoxysilylpropylmethylcarbamat (Evonik Industries AG) und 205 g Isocyanatopropyltrimethoxysilan (Evonik Industries AG) werden miteinander vermischt und 2 h auf 175 °C erhitzt. Danach werden die Ausgangsprodukte bei 100 °C und 0,3 mbar über eine Kurzweg-Destillation abgetrennt. Es verbleiben 183 g (41,5%) einer reinen, wasserklaren Flüssigkeit. C13-NMR in CDCl₃ (ppm): 156,9 (1); 154,4 (1); 53,5 (1); 50,5 (10); 46,3 (1); 43,2 (1); 23,2 (1); 22,6 (1), 6,7 (1); 6,5 (1).
   Viskosität beträgt ca. 200 mPas und ist damit sehr niedrigviskos.
b) 236 g (1 mol) Trimethoxysilylpropylmethylcarbamat (Evonik Industries AG), 205 g Isocyanatopropyltrimethoxysilan (Evonik Industries AG) und 0,4 g Zinn(II)chlorid werden miteinander vermischt und 1 h auf 150 °C erhitzt. Danach werden die Ausgangsprodukte bei 90 °C und 0,3 mbar über eine Kurzweg-Destillation abgetrennt. Es verbleiben 339 g (76,9%) einer reinen, wasserklaren Flüssigkeit. (NMR s.o.)
c) 236 g (1 mol) Trimethoxysilylpropylmethylcarbamat (Evonik Industries AG), 205 g Isocyanatopropyltrimethoxysilan (Evonik Industries AG) und 1 g Eisen(III)acetylacetonat werden miteinander vermischt und 3 h auf 90 °C erhitzt. Danach werden die Ausgangsprodukte bei 90 °C und 0,3 mbar über eine Kurzweg-Destillation abgetrennt. Es verbleiben 184 g (41,5%) einer reinen, wasserklaren Flüssigkeit. (NMR s.o.)

### 2) Beschichtungsmittel erfindungsgemäß

### Formulierung:

44,5 g Setalux 1760 (OH-funktionelles Acrylat, Nuplex industries) und 30 g vom erfindungsgemäßen Produkt a) werden mit 25 g Butylacetat/Xylol (1:1) gemischt und mit 0,5 g Katalysator (VESTANAT EP-CAT 11, Evonik Industries AG) versetzt. Diese Mischung wird mit einem 120 µm Spiralrakel auf ein Stahlblech aufgerakelt und 22 min bei 140 °C eingebrannt. Die Beschichtung (30 µm Schichtdicke) weist eine Pendelhärte von 176 s und eine Chemikalienbeständigkeit von >150 MEK Doppelhübe auf. Sie ist also vollständig ausgehärtet. Kratzfestigkeit:
Der Ausgangsglanzgrad beträgt 86 Skalenteile (Skt.) (20°). Nach dem Bürstentest ist der Glanzgrad auf 84 Skt. gesunken. Der Crockmetertest führt zu einem Glanzgrad von 83 Skt. Der Glanzgradverlust beträgt also 2 bzw. 3 Skt. und damit ist die Kratzfestigkeit exzellent!
Wertung: Glanzgradverlust durch Kratzer 0-9 Skt. exzellent, 10-20 sehr gut, 21-34 gut, 35-44 mittel, >45 schlecht
Im Vergleich dazu ergeben handelsübliche 2K-PUR Lacke auf Basis von Setalux 1760 einen Glanzgradverlust von ca. 30 Skt.

### Bürstentest (nass):

### Gerät: U 1 Fabr.-Nr. 003, Hersteller: BASF L + F, Baujahr: 1993

Die Lackoberfläche wird mit einem Siebgewebe (Nylon-Siebgewebe Nr. 11, Maschenweite 25 µm), welches mit einer Masse (2 kg) belastet wird, geschädigt. Das Siebgewebe und die Lackoberfläche werden mit einer Waschmittellösung (0,25 %ige Persil-Lösung in Wasser) reichlich benetzt. Die Prüftafel wird mittels eines Motorantriebes in Hubbewegungen unter dem Siebgewebe vor- und zurückgeschoben. Vor und nach dem Test wird der Glanzgrad gemessen.

### Crockmetertest (trocken)

### Gerät: U 1 Fabr.-Nr. 003, Hersteller: BASF L + F, Baujahr: 1993

Die Lackoberfläche wird mit einem Gewebe (3M 281Q WetODry Polishing Paper), welches mit einer Masse (920 g) belastet wird, geschädigt. Die Prüftafel wird mittels eines Motorantriebes in Hubbewegungen unter dem Gewebe vor- und zurückgeschoben.

## Patentansprüche

1. Beschichtungsmittel umfassend
A) wenigstens eine Allophanat haltige Verbindungen mit der Formel 1: 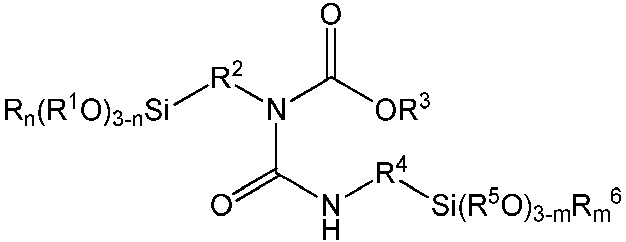 wobei R, R¹-R⁶ unabhängig voneinander gleiche oder verschiedene Kohlenwasserstoffreste mit 1-8 C-Atomen bedeuten, wobei diese verzweigt oder cyclisch sein können, oder auch cyclisch ineinander übergehen können, und m und n unabhängig voneinander gleich 0-2 bedeutet,
B) wenigstens ein Bindemittel,
C) optional wenigstens ein aliphatisches oder cycloaliphatisches Polyisocyanat, das eine NCO-Funktionalität von wenigstens 2 aufweist,
D) optional wenigstens einen Katalysator,
E) optional Hilfsstoffstoffe und/oder Zusatzstoff,
F) optional Lösungsmittel.

2. Beschichtungsmittel nach Anspruch 1, umfassend
A) 10-99 Gew.% wenigstens eine Allophanat haltige Verbindungen mit der Formel 1: 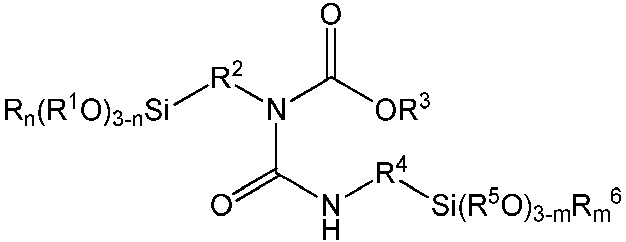 wobei R, R¹-R⁶ unabhängig voneinander gleiche oder verschiedene Kohlenwasserstoffreste mit 1-8 C-Atomen bedeuten, wobei diese verzweigt oder cyclisch sein können, oder auch cyclisch ineinander übergehen können, und m und n unabhängig voneinander gleich 0-2 bedeutet,
B) 1-90 Gew.% wenigstens ein Bindemittel, ,
C) 0-50 Gew.% wenigstens ein aliphatisches oder cycloaliphatisches Polyisocyanat, das eine NCO-Funktionalität von wenigstens 2, bevorzugt 2,8 bis 6 aufweist,
D) 0-5 Gew.% wenigstens einen Katalysator,
E) 0-50 Gew.% Hilfsstoffstoffe und/oder Zusatzstoff,
wobei sich die Komponenten A)-E) zu 100 Gew.% addieren,
F) optional Lösungsmittel.

3. Beschichtungsmittel nach mindestens einem der vorherigen Ansprüche, wobei m und n gleich 0, R¹ und R⁵ gleich Methyl oder Ethyl, und R² und R⁴ gleich Methyl oder Propyl.

4. Beschichtungsmittel nach mindestens einem der vorherigen Ansprüche, wobei mit m und n gleich 0, R¹ = R⁵ = Methyl und R² = R⁴ = Propyl.

5. Beschichtungsmittel nach mindestens einem der vorherigen Ansprüche, **dadurch gekennzeichnet, dass** als Bindemittel B) ein hydroxylgruppenhaltiges und/oder amingruppenhaltiges Bindemittel enthalten ist.

6. Beschichtungsmittel nach mindestens einem der vorherigen Ansprüche, **dadurch gekennzeichnet, dass** als Bindemittel B) hydroxylgruppenhaltige Polyester, Polyether, Polyacrylate, Polycarbonate und Polyurethane mit einer OH-Zahl von 20 bis 500 mg KOH/g und einer mittleren Molmasse von 250 bis 6000 g/Mol, allein oder in Mischungen, enthalten sind.

7. Beschichtungsmittel nach mindestens einem der vorherigen Ansprüche, **dadurch gekennzeichnet, dass dadurch gekennzeichnet, dass** als Bindemittel B) hydroxylgruppenhaltige Polyester oder Polyacrylate mit einer OH-Zahl von 50 bis 250 mg KOH/g und einem mittleren Molekulargewicht von 500 bis 6000 g/mol als Bindemittelkomponenten, allein oder in Mischungen, enthalten sind.

8. Beschichtungsmittel nach mindestens einem der vorherigen Ansprüche, **dadurch gekennzeichnet, dass** als Bindemittel B) mindestens ein Addukt von einem Isocyanatotrialkyoxysilan und einem ein- oder mehrwertigen Alkohol enthalten ist.

9. Beschichtungsmittel nach mindestens einem der vorherigen Ansprüche, **dadurch gekennzeichnet, dass** als Bindemittel B) mindestens ein Derivat von hydroxylgruppenhaltigen Polyethern, Polyestern, Polycarbonatdiolen oder Polyacrylaten mit Isocyanatopropyltrialkoxysilan, allein oder in Mischungen, enthalten ist.

10. Beschichtungsmittel nach mindestens einem der vorherigen Ansprüche, **dadurch gekennzeichnet, dass** als Bindemittel B), Aminopropyltriethoxysilan, Aminomethyltrimethoxysilan oder Aminomethyltriethyoxysilan, allein oder in Mischungen, enthalten ist.

11. Beschichtungsmittel nach mindestens einem der vorherigen Ansprüche, **dadurch gekennzeichnet, dass** als Komponente C) Isophorondiisocyanat (IPDI), Hexamethylendiisocyanat (HDI), Diisocyanatodicyclohexylmethan (H12MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI), allein oder in Mischungen, enthalten ist.

12. Beschichtungsmittel nach mindestens einem der vorherigen Ansprüche, **dadurch gekennzeichnet, dass** als Komponente C) IPDI, HDI, TMDI und/oder H12MDI, allein oder in Mischungen, enthalten sind.

13. Beschichtungsmittel nach mindestens einem der vorherigen Ansprüche, **dadurch gekennzeichnet, dass** als Komponente C) Isocyanurate, insbesondere aus IPDI und/oder HDI, enthalten sind.

14. Beschichtungsmittel nach mindestens einem der vorherigen Ansprüche, **dadurch gekennzeichnet, dass** als Komponente D) Metallcarboxylate, tert.-Amine, Amidine Guanidine, quarternäre Ammoniumsalze, Tetralkylammoniumsalze, quarternäre Phosphoniumsalze, Metallacetylacetonate quarternäre Ammoniumacetylacetonate quarternäre Phosphoniumacetylacetonate, allein oder in Mischungen, enthalten sind.

15. Beschichtungsmittel nach mindestens einem der vorherigen Ansprüche, **dadurch gekennzeichnet, dass** als Zusatzstoffe E) Stabilisatoren, Lichtschutzmittel, Katalysatoren, zusätzliche Vernetzer, Füllstoffe, Pigmente, Verlaufsmittel oder Rheologiehilfsmittel, allein oder in Mischungen, enthalten sind.

16. Verwendung der Beschichtungsmittel nach mindestens einem der vorherigen Ansprüche, in Lackzusammensetzungen und Klebstoffzusammensetzungen und Metallbeschichtungszusammensetzungen.

17. Verfahren zur Herstellung der Beschichtungsmittel nach mindestens einem der vorherigen Ansprüche 1-14, durch Mischung der Komponenten A)-F).

## Claims

1. Coating composition comprising
A) at least one allophanate-containing compounds having the formula 1: 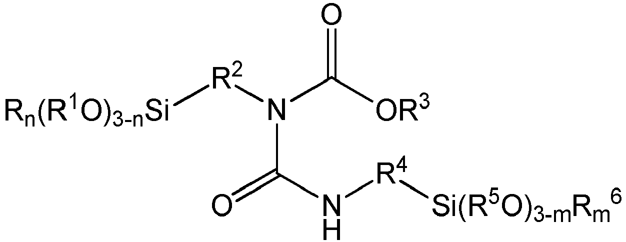 where R, R¹-R⁶ are each independently identical or different hydrocarbyl radicals having 1-8 carbon atoms, which may be branched or cyclic, or else may be integrated together to form a cyclic system, and m and n are each independently 0-2,
B) at least one binder,
C) optionally at least one aliphatic or cycloaliphatic polyisocyanate having an NCO functionality of at least 2,
D) optionally at least one catalyst,
E) optionally auxiliaries and/or additive,
F) optionally solvents.

2. Coating composition according to Claim 1, comprising
A) 10-99 wt% of at least one allophanate-containing compounds having the formula 1: 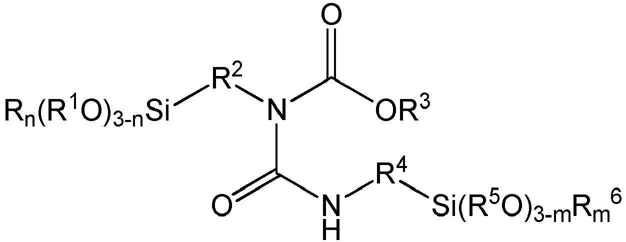 where R, R¹-R⁶ are each independently identical or different hydrocarbyl radicals having 1-8 carbon atoms, which may be branched or cyclic, or else may be integrated together to form a cyclic system, and m and n are each independently 0-2,
B) 1-90 wt% of at least one binder,
C) 0-50 wt% of at least one aliphatic or cycloaliphatic polyisocyanate having an NCO functionality of at least 2, preferably 2.8 to 6,
D) 0-5 wt% of at least one catalyst,
E) 0-50 wt% of auxiliaries and/or additive,
where components A)-E) add up to 100 wt%,
F) optionally solvents.

3. Coating composition according to at least one of the preceding claims, where m and n are each 0, R¹ and R⁵ are each methyl or ethyl and R² and R⁴ are each methyl or propyl.

4. Coating composition according to at least one of the preceding claims, where with m and n are each 0, R¹ = R⁵ = methyl and R² = R⁴ = propyl.

5. Coating composition according to at least one of the preceding claims, **characterized in that** the binder B) present is a hydroxyl-containing and/or amine-containing binder.

6. Coating composition according to at least one of the preceding claims, **characterized in that** binders B) present are hydroxyl-containing polyesters, polyethers, polyacrylates, polycarbonates and polyurethanes having an OH number of 20 to 500 mg KOH/g and a mean molar mass of 250 to 6000 g/mol, alone or in mixtures.

7. Coating composition according to at least one of the preceding claims, **characterized in that**, **characterized in that** binders B) present are hydroxyl-containing polyesters or polyacrylates having an OH number of 50 to 250 mg KOH/g and a mean molecular weight of 500 to 6000 g/mol as binder components, alone or in mixtures.

8. Coating composition according to at least one of the preceding claims, **characterized in that** the binder B) present is at least one adduct of an isocyanatotrialkoxysilane and a mono- or polyhydric alcohol.

9. Coating composition according to at least one of the preceding claims, **characterized in that** the binder B) present is at least one derivative of hydroxyl-containing polyethers, polyesters, polycarbonatediols or polyacrylates with isocyanatopropyltrialkoxysilane, alone or in mixtures.

10. Coating composition according to at least one of the preceding claims, **characterized in that** the binder B) present is aminopropyltriethoxysilane, aminomethyltrimethoxysilane or aminomethyltriethoxysilane, alone or in mixtures.

11. Coating composition according to at least one of the preceding claims, **characterized in that** component C) present is isophorone diisocyanate (IPDI), hexamethylene diisocyanate (HDI), diisocyanatodicyclohexylmethane (H12MDI), 2-methylpentane diisocyanate (MPDI), 2,2,4-trimethylhexamethylene diisocyanate/2,4,4-trimethylhexamethylene diisocyanate (TMDI), norbornane diisocyanate (NBDI), alone or in mixtures.

12. Coating composition according to at least one of the preceding claims, **characterized in that** component C) present is IPDI, HDI, TMDI and/or H12MDI, alone or in mixtures.

13. Coating composition according to at least one of the preceding claims, **characterized in that** components C) present are isocyanurates, especially formed from IPDI and/or HDI.

14. Coating composition according to at least one of the preceding claims, **characterized in that** components D) present are metal carboxylates, tert-amines, amidines, guanidines, quaternary ammonium salts, tetraalkylammonium salts, quaternary phosphonium salts, metal acetylacetonates, quaternary ammonium acetylacetonates, quaternary phosphonium acetylacetonates, alone or in mixtures.

15. Coating composition according to at least one of the preceding claims, **characterized in that** additives E) present are stabilizers, light stabilizers, catalysts, additional crosslinkers, fillers, pigments, levelling agents or rheology aids, alone or in mixtures.

16. Use of the coating compositions as claimed in at least one of the preceding claims in paint compositions and adhesive compositions and metal coating compositions.

17. Process for producing the coating compositions according to at least one of the preceding Claims 1-14 by mixing components A)-F).

## Revendications

1. Agents de revêtement, comprenant
A) des composés contenant au moins un allophanate de formule 1 : 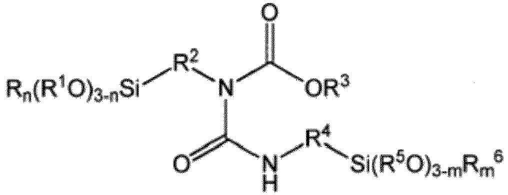 dans laquelle R, R¹-R⁶ représentent, indépendamment les uns des autres, des radicaux hydrocarbonés identiques ou différents, comprenant 1-8 atomes de carbone, ceux-ci pouvant être ramifiés ou cycliques ou également se transformer cycliquement l'un dans l'autre, et m et n valent, indépendamment l'un de l'autre, 0-2,
B) au moins un liant,
C) éventuellement au moins un polyisocyanate aliphatique ou cycloaliphatique, qui présente une fonctionnalité NCO d'au moins 2,
D) éventuellement au moins un catalyseur,
E) éventuellement des adjuvants et/ou additifs,
F) éventuellement des solvants.

2. Agents de revêtement selon la revendication 1, comprenant
A) 10-99% en poids de composés contenant au moins un allophanate de formule 1 : 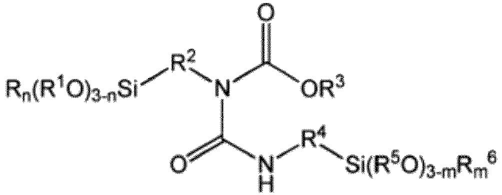 dans laquelle R, R¹-R⁶ représentent, indépendamment les uns des autres, des radicaux hydrocarbonés identiques ou différents, comprenant 1-8 atomes de carbone, ceux-ci pouvant être ramifiés ou cycliques ou également se transformer cycliquement l'un dans l'autre, et m et n valent, indépendamment l'un de l'autre, 0-2,
B) 1-90% en poids d'au moins un liant,
C) 0-50% en poids d'au moins un polyisocyanate aliphatique ou cycloaliphatique, qui présente une fonctionnalité NCO d'au moins 2, de préférence de 2,8 à 6,
D) 0-5% en poids d'au moins un catalyseur,
E) 0-50% en poids d'adjuvants et/ou additifs,
la somme des composants A) à E) valant 100% en poids,
F) éventuellement des solvants.

3. Agents de revêtement selon au moins l'une quelconque des revendications précédentes, m et n valant 0, R¹ et R⁵ représentant méthyle ou éthyle et R² et R⁴ représentant méthyle ou propyle.

4. Agents de revêtement selon au moins l'une quelconque des revendications précédentes, avec m et n valant 0, R¹ = R⁵ = méthyle et R² = R⁴ = propyle.

5. Agents de revêtement selon au moins l'une quelconque des revendications précédentes, **caractérisés en ce qu'**ils contiennent, comme liant B), un liant contenant des groupes hydroxyle et/ou des groupes amine.

6. Agents de revêtement selon au moins l'une quelconque des revendications précédentes, **caractérisés en ce qu'**ils contiennent, comme liant B), des polyesters, des polyéthers, des polyacrylates, des polycarbonates et des polyuréthanes, contenant des groupes hydroxyle, présentant un indice d'OH de 20 à 500 mg de KOH/g et une masse molaire moyenne de 250 à 6000 g/mole, seuls ou en mélange.

7. Agents de revêtement selon au moins l'une quelconque des revendications précédentes, **caractérisés en ce que**, **caractérisés en ce qu'**ils contiennent, comme liant B), des polyesters ou des polyacrylates, contenant des groupes hydroxyle, présentant un indice d'OH de 50 à 250 mg de KOH/g et un poids moléculaire moyen de 500 à 6000 g/mole, comme composants du liant, seuls ou en mélange.

8. Agents de revêtement selon au moins l'une quelconque des revendications précédentes, **caractérisés en ce qu'**ils contiennent, comme liant B), au moins un produit d'addition d'un isocyanatotrialcoxysilane et d'un alcool monovalent ou polyvalent.

9. Agents de revêtement selon au moins l'une quelconque des revendications précédentes, **caractérisés en ce qu'**ils contiennent, comme liant B), au moins un dérivé de polyéthers, de polyesters, de polycarbonatediols ou de polyacrylates, contenant des groupes hydroxyle, avec de l'isocyanatopropyltrialcoxysilane, seuls ou en mélange.

10. Agents de revêtement selon au moins l'une quelconque des revendications précédentes, **caractérisés en ce qu'**ils contiennent, comme liant B), de l'aminopropyltriéthoxysilane, de l'aminométhyltriméthoxysilane ou de l'aminométhyltriéthoxysilane, seuls ou en mélange.

11. Agents de revêtement selon au moins l'une quelconque des revendications précédentes, **caractérisés en ce qu'**ils contiennent, comme composant C), du diisocyanate d'isophorone (IPDI), du diisocyanate d'hexaméthylène (HDI), du diisocyanatodicyclohexylméthane (H12MDI), du diisocyanate de 2-méthylpentane (MPDI), du diisocyanate de 2,2,4-triméthylhexaméthylène/diisocyanate de 2,4,4-triméthylhexaméthylène (TMDI), du diisocyanate de norbornane (NBDI), seuls ou en mélange.

12. Agents de revêtement selon au moins l'une quelconque des revendications précédentes, **caractérisés en ce qu'**ils contiennent, comme composant C), de l'IPDI, du HDI, du TMDI et/ou du H12MDI, seuls ou en mélange.

13. Agents de revêtement selon au moins l'une quelconque des revendications précédentes, **caractérisés en ce qu'**ils contiennent, comme composant C), des isocyanurates, en particulier d'IPDI et/ou de HDI.

14. Agents de revêtement selon au moins l'une quelconque des revendications précédentes, **caractérisés en ce qu'**ils contiennent, comme composant D), des carboxylates métalliques, des tert-amines, des amidines, des guanidines, des sels d'ammonium quaternaire, des sels de tétraalkylammonium, des sels de phosphonium quaternaire, des acétylacétonates métalliques, des acétylacétonates d'ammonium quaternaire, des acétylacétonates de phosphonium quaternaire, seuls ou en mélange.

15. Agents de revêtement selon au moins l'une quelconque des revendications précédentes, **caractérisés en ce qu'**ils contiennent, comme additifs E), des stabilisants, des agents de protection contre la lumière, des catalyseurs, des réticulants supplémentaires, des charges, des pigments, des agents d'étalement ou des adjuvants de rhéologie, seuls ou en mélange.

16. Utilisation des agents de revêtement selon au moins l'une quelconque des revendications précédentes dans des compositions de laque et des compositions adhésives et des compositions de revêtement métallique.

17. Procédé pour la préparation des agents de revêtement selon au moins l'une quelconque des revendications précédentes 1-14 par mélange des composants A)-F).
